# EUROPEAN PATENT SPECIFICATION

(11) **EP 3 374 430 B1**
(45) Date of publication and mention of the grant of the patent: **11.09.2019**
(21) Application number: 16819360.5
(22) Date of filing: 10.11.2016
(51) Int. Cl.: C08L 23/08, C08L 23/12, C09J 123/08, C09J 123/12, B29K 105/00, B29K 23/00, C09J 123/14, C09J 9/00, B29C 39/38, B29C 39/00

(54) **COMPOSITION FOR THE PREPARATION OF AN ADHESIVE PRODUCT**
VERFAHREN ZUR HERSTELLUNG EINES HAFTPRODUKTS
COMPOSITION DE PRÉPARATION D'UN PRODUIT ADHÉSIF

(30) Priority: 11.11.2015 IT UB20155470
(43) Date of publication of application: 19.09.2018
(73) Proprietor: Gloo S.r.l.s., 35013 Cittadella (IT)
(72) Inventor: RICCI MINGANI, Ruggero, 20881 Bernareggio (IT); MASETTO, Enzo, 31100 Treviso (IT)
(74) Representative: Cattaneo, Elisabetta
(86) International application number: PCT/IB2016/056765
(87) International publication number: WO 2017/081632

(56) References cited:
- WO-A2-2012/068573
- US-A1- 2006 014 901
- US-A1- 2012 259 050
- US-A1- 2014 272 219

## Description

### FIELD OF THE INVENTION

The invention relates to an adhesive composition for use in the preparation of an adhesive product, preferably suitable for use in stationery.

### PRIOR ART

The adhesive products currently on the market differ according to the application system.

Liquid adhesive products have been made, such as for example liquid glue known under the trade name of "Pritt fluid", "VINAVIL" or "UHU pen", or paste such as "Pritt stick", which are applied and coupled with the humid product and bonding takes place by drying.

In US 5,703,153 an adhesive composition comprising ethylene vinyl acetate copolymer, and two adhesive resins is described, wherein the copolymer is in an amount of 60% by weight. The application is carried out by means of guns working at high temperatures.

In US 2012/03153 a solid high-strength adhesive formulation is described. This formulation includes polyvinylpyrrolidone and at least one polymeric dispersion comprising polyurethane and which is able to withstand high temperatures.

The object of the present invention therefore is to provide an adhesive product that does not exhibit tackiness before use and which allows the development of the adhesive effect exclusively due to friction with a paper support or another support adapted to be glued or to act as support.

Surprisingly, a new product has been discovered which does not need packaging during application and which simultaneously allows the application of an adhesive product on a support by rubbing on the same support on which the adhesive is to be applied.

### SUMMARY

The above object is achieved by means of an adhesive composition comprising:
- at least one hydrocarbon resin in amount of at most 40% by weight with respect to the total weight of the composition;
- at least one polyolefin derived from the polymerization of ethylene and/or propylene through metallocene catalysis and having a density in the range from 0.8 to 0.9 g/cm³; and
- ethylene vinyl acetate (EVA) copolymer in a maximum amount equal to 15% by weight with respect to the total weight of the composition.

In the present invention, when the following terms are used:
- "hydrocarbon resin preferably having a predetermined softening point", it is intended a resin wherein the softening point was determined by the method specified by the manufacturer on the respective technical data sheet, generally according to the ASTM E28 method (ring & ball) or, alternatively, according to the ETM E-24 method (ExxonMobil Test Method based on ASTM D-6090-97)
- "a polyolefin derived from the polymerization of ethylene and/or propylene with metallocene catalysis having a predetermined density", it is intended a polyolefin wherein the density was determined by the method specified by the manufacturer on the technical data sheet.

The invention also relates to a glue product comprising and obtainable from the adhesive composition of the invention and excipients suitable for use.

The inventors of the present invention have surprisingly prepared a glue product that is ready for use and is advantageously made and used as an adhesive product without the use of any type of packaging, except what is strictly necessary to the presentation of the product.

The inventors have in fact surprisingly found the combination of the three ingredients above that allows increasing the transfer of material from the adhesive to the support and, at the same time, ensures the sliding, i.e. the ability to apply the product with a reduced pressure and a reduced tangential force, so that the use is simple even for children.

A product has thus surprisingly been obtained, having a good adhesiveness, a sufficient transfer on the support and at the same time having a consistency such as not to produce filaments and smears during application. Without being bound to any theory, the inventors believe that they have succeeded by studying the incompatibility between certain raw materials, by type and quantity which, while allowing a "clean" distribution, do not interfere with the adhesiveness of the product.

Advantageously, therefore, the glue product of the invention is neither easily deformed as is the case for paste products, to prevent it from being accidentally damaged during use, nor is in liquid form to prevent accidental leakage thereof. The material may be realized in different shapes and colors, as well as in different fragrances.

As will be apparent from the following detailed description and experimental part, the product is able to glue paper on paper in a permanent manner, but also to glue paper on non-absorbent supports in a semi-permanent manner of the "stick & remove" type without dirtying the surfaces.

### DESCRIPTION OF THE FIGURES

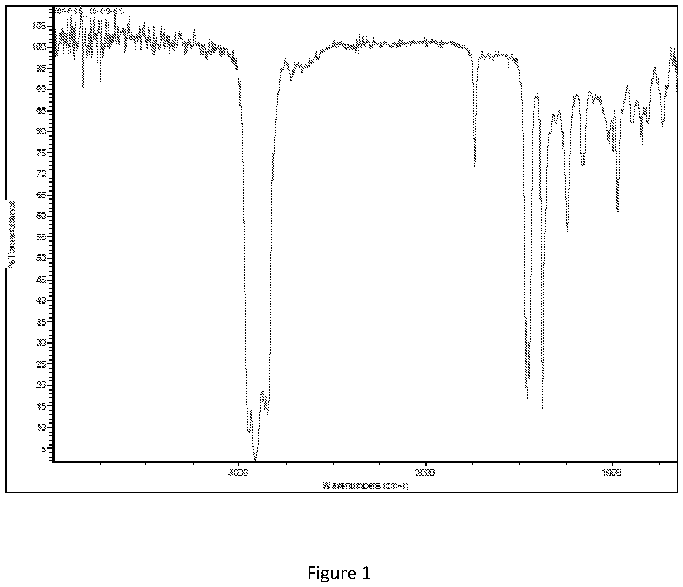

Figure 1 corresponds to the IR spectrum of the product of the invention obtained in example 1.

### DETAILED DESCRIPTION OF THE INVENTION

The invention therefore relates to an adhesive composition comprising:
- at least one hydrocarbon resin in amount of at most 40% by weight with respect to the total weight of the composition;
- at least one polyolefin derived from the polymerization of ethylene and/or propylene through metallocene catalysis and having a density in the range from 0.8 to 0.9 g/cm³;
- ethylene vinyl acetate (EVA) copolymer in an amount of at most 15% by weight with respect to the total weight of the composition.

The adhesive composition of the invention therefore comprises one or more hydrocarbon resins, in a maximum amount of 40% by weight with respect to the total weight of the composition. Preferably, said one or more hydrocarbon resin is preferably hydrogenated and is, more preferably, transparent colorless, i.e. generally indicated by the term "water white". "Water white" resins were found to be preferable over resins not hydrogenated or hydrogenated but not white water, as they are completely transparent, colorless and odorless, thus advantageously allowing a final product to be obtained which is devoid of yellow color and undesired odor. Still more preferably, said one or more hydrocarbon resin has a softening point in the range from 80 to 130 °C. Said one or more hydrocarbon resins are preferably in amount of at most 35% by weight with respect to the total weight of the adhesive composition.

In a preferred embodiment of the invention, the composition comprises at least one hydrocarbon resin, preferably hydrogenated, more preferably "water white", having a softening point in the range from 120 to 130 °C. Advantageously, in this embodiment said resin is in an amount of at least 5% by weight with respect to the total weight of the adhesive composition. Up to at most 35%, or preferably 30%, the remaining amount of hydrogenated hydrocarbon resin may be a resin having a softening point in the range from 85 to 100 °C.

Preferably, said hydrocarbon resin is hydrogenated and is a resin selected from the group consisting of: hydrogenated hydrocarbon resin sold under the trade name of REGALITE R1090 by Eastman, hydrogenated hydrocarbon resin sold under the trade name of ARKON P125 by Arakawa, hydrogenated hydrocarbon resin sold under the trade name of Eastotac H-130W (hydrogenated C5) by Eastman, hydrogenated hydrocarbon resin sold under the trade name of Escorez 5320 by Exxon, hydrogenated hydrocarbon resin sold under the trade name of Regalite R1125 (hydrogenated C9) by Eastman.

In one embodiment of the invention, the composition contains a different proportion between the two types of resins having different softening points. By increasing the proportion of hydrocarbon resin, preferably hydrogenated and white water and having a softening point in the range from 120 to 130 °C, at the expense of the hydrogenated hydrocarbon resin, preferably white water and having a softening point in the range from 80 to 130 °C, alternative versions of the preferred composition may be obtained, having increasing shore hardness. The adhesive composition also comprises at least one polyolefin derived from the polymerization of ethylene and/or propylene through metallocene catalysis and having a density in the range from 0.8 to 0.9 g/cm³, preferably a density in the range from 0.86 to 0.89 g/cm³

Preferably, said polyolefin derived from the polymerization of ethylene/propylene with metallocene catalysis is one selected from the group consisting of: polyolefin derived from the polymerization of ethylene and/or propylene with metallocene catalysis sold under the trade name of LICOCENE PP1302 sold by Clariant, polyolefin derived from the polymerization of ethylene and/or propylene with metallocene catalysis sold under the name of LICOCENE PP1502 by Clariant, polyolefin derived from the polymerization of ethylene and/or propylene with metallocene catalysis sold under the name of LICOCENE PP1602 by Clariant, polyolefin derived from the polymerization of ethylene and/or propylene with metallocene catalysis sold under the name of LICOCENE PP2602 sold by Clariant, polyolefin derived from the polymerization of ethylene and/or propylene with metallocene catalysis sold under the name of Affinity GA1900 or Affinity GA1950, both manufactured by Dow.

The adhesive composition also comprises an ethylene vinyl acetate copolymer. Said EVA copolymer is in an amount of at most 15% by weight with respect to the weight of the composition, preferably in amounts from 10 to 15% by weight with respect to the weight of the total composition. Preferably, said ethylene vinyl acetate copolymer is a copolymer selected from the group consisting of ethylene vinyl acetate copolymer sold under the trade name of Escorene Ultra MV 02528EH2 (sold by Exxon), ethylene vinyl acetate copolymer sold under the trade name of Evatane 50018, ethylene vinyl acetate copolymer sold under the trade name of EVA Alcudia PA-448, Evatane 15028, Evatane 15018 (all sold by Arkema), ethylene vinyl acetate copolymer sold under the trade name of LG EVA 15028 (by LG Chem), ethylene vinyl acetate copolymer sold under the trade name of Seetec VA900 (by Lotte Chemicals).

Alternatively, the ethylene vinyl acetate copolymer of the invention may be a product based on EVA grafted with maleic anhydride, such as the product known under the trade name of Orevac 9305 sold by Arkema.

The composition also comprises excipients selected from the group consisting of dyes, pigments, perfumes, glitter.

In another aspect thereof, the invention comprises a glue product comprising the adhesive composition according to the invention and excipients suitable for the final formulation.

The glue product is therefore prepared with the adhesive composition of the invention.

Therefore, the invention also relates to a process for the preparation of a glue product comprising the steps of:
a) placing the adhesive composition described above in a suitable container;
b) heating and mixing the composition at a temperature in the range from 125 °C to 220 °C;
c) pouring the product of step b) in a suitable mould of desired shape; and
d) cooling the product in the mould of step c) to a temperature from -10 °C to 25 °C.

In the process of the invention, the suitable container of step a) is a container preferably having non-stick surfaces.

In step b), the heating temperature of the mixture is preferably about 200 °C. The heating preferably takes place on an electric plate. The mixing may advantageously be carried out during heating, either in a continuous manner or for repeated short periods of time.

Between step b) and step c), advantageously the product of step b) is subjected to a degassing step, preferably under vacuum.

In step c), the suitable mould of desired shape is made of silicone material or other non-stick surface.

In step d), the product of step c) is cooled to a temperature in the range from -10 °C to 25 °C, preferably through water (also with antifreezing liquid), optionally also in the presence of a detaching additive, or through air with temperatures from -10 °C to 25 °C or still through nitrogen or other cryogenic gas. Advantageously, the product of the process is left to rest for at least one hour before removing it from the mould and obtain the product of the invention in the desired shape.

In another aspect thereof, the invention therefore relates to a ready-to-use glue product obtainable by the process indicated above.

The final product thus obtained advantageously has no packaging and is prepared in a desired shape determined by the mould of step c). This product is a glue product that can be applied by simple rubbing on a support. Advantageously, the product of the invention is suitable for home use, as stationery item. It has no packaging, but can be handled without problems of product release on the hands, because it is not sticky or deformable to the touch. It can be advantageously applied on a support, such as paper, by simple rubbing and, where applied, it exhibits good adhesive properties, allowing the adhesion of a second support such as paper, glass, plastic, metal, wood, ceramic, plaster, painted substrates.

The invention therefore relates to the use of the adhesive product of the invention as a ready-to-use stationery adhesive free of packaging during use.

### Experimental part

### Example 1: preparation of product 1 of the invention

The following ingredients in the indicated amounts were placed in a container with non-stick surfaces:
30 grams of white water hydrogenated hydrocarbon resin sold under the trade name of Regalite R1090 by Eastman and having a softening point of 88 °C (as determined by the ASTM E-28 (ring and ball) method as indicated by the manufacturer on the technical data sheet)
5 grams of white water hydrogenated hydrocarbon resin sold under the trade name of Regalite R1125 by Eastman and having a softening point of 125°C (as determined by the ASTM E-28 (ring and ball) method as indicated by the manufacturer on the technical data sheet)
55 grams of polyolefin derived from the polymerization of ethylene and propylene through metallocene catalysis sold under the trade name of Licocene PP1502 by Clariant and having a density of 0.87 g/cm³
10 grams of ethylene vinyl acetate copolymer sold under the trade name of Escorene Ultra MV02528 EH2 by Exxon. Said EVA had an elongation at break of about 140% and a tensile strength of 1.5MPa (as determined by the ISO527 - ASTM D638 method, respectively, as indicated by the manufacturer on the technical data sheet).

The ingredients, in form of granules or crystals, were placed in a container with non-stick surfaces and heated on a laboratory electric plate set at a temperature of 200 °C. The product was mixed, every three minutes, with a Teflon rod. After about 12 minutes, the material appeared totally melted and evenly mixed. The container was then placed in an oven, preheated to 180 °C, for ten minutes, to allow the expulsion of incorporated air from the mixture (degassing).

The resulting product was then poured into silicone formwork and it was cooled with water. The cooled product was then left to rest for about three hours and then taken out of the moulds.

The glue product thus obtained was not deformable or sticky to the touch.

The softening point of the resulting product 1 was evaluated by the ASTM E28 (Ring & Ball) and TMA methods (Thermomechanical Analysis, internal method Unicol with Seiko Exstar TMA/SS6000 instrument).

The softening point was 71 °C and the TMA was 64.7 °C. The IR spectrum of the product was then obtained (internal method Unicol with Nicolet Nexus FT-IR instrument) and the spectrum shown in figure 1 was obtained.

The glue product was tested for the following properties:
- SLIDING: on a sheet of A4 paper, the glue product of the invention was applied by rubbing so as to leave an adhesive strip of 3-4 mm in width, the sliding was assessed on a scale of 1 to 4, where 1 is insufficient, 2 is sufficient, 3 is good and 4 is excellent;
- TRANSFER ON PAPER: on a sheet of A4 paper, the glue product of the invention was applied by rubbing so as to leave an adhesive strip of 3-4 mm in width, and the transfer on paper was assessed on a scale of 1 to 4, where 1 is insufficient, 2 is sufficient, 3 is good and 4 is excellent;
- FILM TACKINESS: on a sheet of A4 paper, the glue product of the invention was applied by rubbing so as to leave an adhesive strip of 3-4 mm in width and the tackiness was assessed on a scale of 1 to 4, where 1 is insufficient, 2 is sufficient, 3 is good and 4 is excellent;
- ADHESION: on a sheet of A4 paper, the glue product of the invention was applied by rubbing so as to leave an adhesive strip of 3-4 mm in width between 5 mm and 25 mm from the edge, for about 80% of the sheet width, then the two heads of the sheet were coupled and the thumb was passed 3 times applying a pressure at the adhesive. The adhesion was assessed on a scale of 1 to 4, where 1 is insufficient, 2 is sufficient, 3 is good and 4 is excellent.
- PAPER TEARING: on a sheet of A4 paper, the glue product of the invention was applied by rubbing so as to leave an adhesive strip of 3-4 mm in width between 5 mm and 25 mm from the edge, for about 80% of the sheet width, and a second paper strip similar to the first one, at a distance of about two cm. The sheet was then folded so as to superimpose the two strips of glue and the thumb was passed 3 times applying pressure at the adhesive. The paper tearing was assessed on a scale of 1 to 4, where 1 is insufficient, 2 is sufficient, 3 is good and 4 is excellent.

The following results were obtained:

| TEST | |
|---|---|
| sliding | 3 |
| transfer on paper | 4 |
| film tackiness | 4 |
| adhesion | 4 |
| paper tearing | 3 |
| TOTAL | 18 |

As is seen in the table of the results, product 1 showed excellent properties as a glue when applied.

### Example 2: Preparation and evaluation of the glue products 2, 3, 4 of the invention

Following the procedure indicated in example 1 and using the same ingredients, the glue products 2-4 of the invention were prepared using the following amounts:

| Ingredient | Product 2 (grams) | Product 3 (grams) | Product 4 (grams) |
|---|---|---|---|
| Regalite R1090 | 20 | 10 | 0 |
| Regalite R1125 | 15 | 25 | 35 |
| Licocene PP1502 | 55 | 55 | 55 |
| Escorene Ultra MV02528EH2 | 10 | 10 | 10 |

Products 2-4 were evaluated for the same properties of product 1 under the same conditions and the following results were obtained.

| Test | Product 2 | Product 3 | Product 4 |
|---|---|---|---|
| Sliding | 3 | 3 | 3 |
| Transfer on paper | 4 | 4 | 4 |
| Film tackiness | 4 | 4 | 4 |
| Adhesion | 4 | 4 | 4 |
| Paper tearing | 3 | 3 | 3 |
| Total | 18 | 18 | 18 |

As seen from the table above, all the products of the invention, having different amounts of hydrogenated hydrocarbon resins, showed excellent properties as a glue, preferably suitable for use in stationery.

### Example 3: Preparation and evaluation of the glue products of the invention obtained with non-hydrogenated hydrocarbon resins

Following the procedure indicated in example 1, the glue products 5-8 of the invention were prepared using the following amounts:

| ingredient | Product 5 (g) | Product 6 (g) | Product 7 (g) | Product 8 (g) |
|---|---|---|---|---|
| LICOCENE PP1502 | 55 | 55 | 55 | 55 |
| ESCOREZ 1502 | 10 | 20 | 30 | 35 |
| ARKON P125 | 25 | 15 | 5 | |
| ESCORENE MV 02528 | 10 | 10 | 10 | 10 |

The products thus obtained were tested. The results obtained were good in terms of sliding, transfer, adhesion, tackiness and paper tearing. However, all the products obtained had a yellow color and had a strong odor.

### Comparative example.

In order to evaluate the criticality of the ingredients of the invention, some comparative examples are given hereinafter:
Following the procedure indicated in example 1 and using the same ingredients, the comparative glue products were prepared using the following amounts:

| Ingredient | Comparative product 1 (grams) | Comparative product 2 (grams) | Comparative product 3 (grams) | Comparative product 4 (grams) |
|---|---|---|---|---|
| Regalite R1090 | 38.6 | 47.1 | 55.7 | 30 |
| Regalite R1125 | 6.4 | 7.9 | 9.3 | 5 |
| Licocene PP1502 | 45 | 35 | 25 | 45 |
| Escorene Ultra MV02528 EH2 | 10 | 10 | 10 | 20 |

The comparative products 1-4 were evaluated for the same properties of product 1 under the same conditions and the following results were obtained.

| Test | Product 1 | Product 2 | Product 3 | Product 4 |
|---|---|---|---|---|
| Sliding | 2 | 2 | 3 | 2 |
| Transfer on paper | 1 | 1 | 1 | 1 |
| Film tackiness | 2 | 1 | 1 | 1 |
| Adhesion | 2 | 1 | 1 | 1 |
| Paper tearing | 1 | 1 | 1 | 1 |
| Total | 8 | 6 | 7 | 6 |

As shown in the table above, the comparative products did not solve the problem of the invention. Moreover, the comparative product 1 was transferred too much and the comparative products 2 and 3 produced filaments and were also deformed to the touch. Product 4 which had an amount of 20% by weight of EVA was overly cohesive, so as to prevent the transfer of paper, and thereby the other properties.

## Claims

1. An adhesive composition comprising:
- at least one hydrocarbon resin in amount of at most 40% by weight with respect to the total weight of the composition;
- at least one polyolefin derived from the polymerization of ethylene and/or propylene through metallocene catalysis and having a density in the range from 0.8 to 0.9 g/cm³; and
- ethylene vinyl acetate (EVA) copolymer in an amount of at most 15% by weight with respect to the total weight of the composition.

2. The composition according to claim 1, wherein at least one hydrocarbon resin is hydrogenated, preferably transparent, commonly named as water white.

3. The composition according to claim 1 or 2, wherein the at least hydrocarbon resin is hydrogenated and has a softening point in the range from 80 to 130 °C.

4. The composition according to any one of claims 1 to 3, wherein at least one hydrocarbon resin is hydrogenated and is in an amount of at most 35% by weight with respect to the total weight of the composition.

5. The composition according to anyone of claims 1 to 4, wherein the at least hydrogenated hydrocarbon resin has a softening point in the range from 120 to 130°C and is in an amount of at least 5% by weight with respect to the total weight of the composition.

6. The composition according to any one of claims 1 to 5, wherein the composition comprises two hydrogenated hydrocarbon resins, of which at least one in an amount of 5% by weight with respect to the total weight of the composition and having a softening point in the range from 120 to 130 °C.

7. The composition according to any one of claims 1 to 6, wherein at least one polyolefin derived from the polymerization of ethylene and/or propylene through metallocene catalysis has a density in the range from 0.86 to 0.89 g/cm³.

8. The composition according to any one of claims 1 to 7, wherein the EVA copolymer is in an amount from 10 to 15% by weight with respect to the total weight of the composition.

9. The composition according to any one of claims 1 to 8, wherein the composition also comprises excipients selected from the group consisting of perfumes, dyes, pigments, glitter.

10. A glue product comprising the adhesive composition according to any one of claims 1 to 9 and excipients suitable for the final formulation.

11. A process for the preparation of the glue product according to claim 10, comprising the steps of:
a) placing the adhesive composition according to any one of claims 1 to 9 in a suitable container;
b) heating and mixing the composition at a temperature in the range from 125 °C to 220 °C;
c) pouring the product of step b) in a suitable mould of desired shape; and
d) cooling the product in the mould of the step c) to a temperature from -10 °C to 25 °C.

12. The process according to claim 11, wherein between the step b) and the step c), the product of step b) is subjected to a degassing step, preferably under vacuum.

13. The process according to claim 11 or 12, wherein the suitable mould of desired shape of step c) is of silicone material or other non-stick material.

14. The process according to any one of claims 11 to 13, wherein the step d) of cooling is carried out through water, optionally in the presence of antifreezing liquid, optionally also in the presence of a detaching additive, or through air with temperatures from -10 °C to 25 °C or still through nitrogen or other cryogenic gas.

15. The process according to any one of claims 11 to 14, wherein the product of step d) is left to rest for at least one hour in the mould before removing it so as to obtain the product in a desired shape.

16. A ready-to-use glue product obtainable by the process according to any one of claims 11 to 15.

17. Use of the glue product according to claim 10 or claim 16 as a ready-to-use stationery adhesive product.

## Patentansprüche

1. Haftzusammensetzung, umfassend:
- wenigstens ein Kohlenwasserstoffharz in einem Anteil von höchstens 40 Gew.-% in Bezug auf das Gesamtgewicht der Zusammensetzung;
- wenigstens ein Polyolefin, das aus der Polymerisation von Ethylen und/oder Propylen durch Metallocenkatalyse abgeleitet ist und eine Dichte im Bereich von 0,8 bis 0,9 g/cm³ aufweist; und
- Ethylenvinylacetat (EVA)-Copolymer in einem Anteil von höchstens 15 Gew.-% in Bezug auf das Gesamtgewicht der Zusammensetzung.

2. Zusammensetzung nach Anspruch 1, wobei wenigstens ein Kohlenwasserstoffharz hydriert, vorzugsweise transparent - üblicherweise als wasserweiß bezeichnet - ist.

3. Zusammensetzung nach Anspruch 1 oder 2, wobei das wenigstens eine Kohlenwasserstoffharz hydriert ist und einen Erweichungspunkt im Bereich von 80 bis 130 °C aufweist.

4. Zusammensetzung nach einem der Ansprüche 1 bis 3, wobei das wenigstens eine Kohlenwasserstoffharz hydriert ist und in einem Anteil von höchstens 35 Gew.-% in Bezug auf das Gesamtgewicht der Zusammensetzung vorliegt.

5. Zusammensetzung nach einem der Ansprüche 1 bis 4, wobei das wenigstens eine hydrierte Kohlenwasserstoffharz einen Erweichungspunkt im Bereich von 120 bis 130 °C aufweist und in einem Anteil von höchstens 5 Gew.-% in Bezug auf das Gesamtgewicht der Zusammensetzung vorliegt.

6. Zusammensetzung nach einem der Ansprüche 1 bis 5, wobei die Zusammensetzung zwei hydrierte Kohlenwasserstoffharze umfasst, von denen wenigstens eines in einem Anteil von 5 Gew.-% in Bezug auf das Gesamtgewicht der Zusammensetzung vorliegt und einen Erweichungspunkt im Bereich von 120 bis 130 °C aufweist.

7. Zusammensetzung nach einem der Ansprüche 1 bis 6, wobei das wenigstens eine Polyolefin, das aus der Polymerisation von Ethylen und/oder Propylen durch Metallocenkatalyse abgeleitet ist, eine Dichte im Bereich von 0,86 bis 0,89 g/cm³ aufweist.

8. Zusammensetzung nach einem der Ansprüche 1 bis 7, wobei das EVA-Copolymer in einem Anteil von 10 bis 15 Gew.-% in Bezug auf das Gesamtgewicht der Zusammensetzung vorliegt.

9. Zusammensetzung nach einem der Ansprüche 1 bis 8, wobei die Zusammensetzung auch Trägerstoffe umfasst, ausgewählt aus der Gruppe bestehend aus Parfümen, Farbstoffen, Pigmenten, Glitter.

10. Haftprodukt, umfassend die Haftzusammensetzung nach einem der Ansprüche 1 bis 9 und für die endgültige Formulierung geeignete Trägerstoffe.

11. Verfahren zur Herstellung des Klebeprodukts nach Anspruch 10, umfassend die Schritte:
a) Anordnen der Haftzusammensetzung nach einem der Ansprüche 1 bis 9 in einem dazu geeigneten Behälter;
b) Erhitzen und Mischen der Zusammensetzung bei einer Temperatur im Bereich von 125 °C bis 220 °C;
c) Ausgießen des Produkts aus Schritt b) in eine dazu geeignete Form der gewünschten Gestalt; und
d) Abkühlen des Produkts in der Form aus Schritt c) auf eine Temperatur von -10 °C bis 25 °C.

12. Verfahren nach Anspruch 11, wobei das Produkt aus Schritt b) zwischen dem Schritt b) und dem Schritt c) einem Entgasungsschritt, vorzugsweise unter Vakuum, unterzogen wird.

13. Verfahren nach Anspruch 11 oder 12, wobei die dazu geeignete Form der gewünschten Gestalt aus Schritt c) aus einem Silikonmaterial oder einem anderen nicht-klebrigen Material ist.

14. Verfahren nach einem der Ansprüche 11 bis 13, wobei der Schritt d) des Abkühlens durch Wasser, wahlweise unter Anwesenheit von Frostschutzflüssigkeit, wahlweise auch unter Anwesenheit eines Entformungsadditivs oder mittels Luft bei Temperaturen von -10 °C bis 25 °C oder auch durch Stickstoff oder andere kryogene Gase ausgeführt wird.

15. Verfahren nach einem der Ansprüche 11 bis 14, wobei das Produkt aus Schritt d) vor dem Entfernen mindestens eine Stunde in der Form ruhen gelassen wird, um das Produkt in einer gewünschten Gestalt zu erhalten.

16. Gebrauchsfertiges Klebstoffprodukt, erhältlich durch das Verfahren nach einem der Ansprüche 11 bis 15.

17. Verwendung des Klebstoffprodukts nach Anspruch 10 oder Anspruch 16 als ein gebrauchsfertiges Klebstoffprodukt für Bürobedarf.

## Revendications

1. Composition d'adhésif comprenant :
- au moins une résine d'hydrocarbure dans une quantité d'au plus 40 % en poids par rapport au poids total de la composition ;
- au moins une polyoléfine dérivée de la polymérisation d'éthylène et/ou de propylène par catalyse métallocène et possédant une densité dans la plage de 0,8 à 0,9 g/cm³ ; et
- un copolymère éthylène-acétate de vinyle (EVA) dans une quantité d'au plus 15 % en poids par rapport au poids total de la composition.

2. Composition selon la revendication 1, dans laquelle au moins une résine d'hydrocarbure est hydrogénée, de préférence transparente, couramment désignée par blanc d'eau.

3. Composition selon la revendication 1 ou 2, dans laquelle l'au moins une résine d'hydrocarbure est hydrogénée et possède un point de ramollissement dans la plage de 80 à 130°C.

4. Composition selon l'une quelconque des revendications 1 à 3, dans laquelle au moins une résine d'hydrocarbure est hydrogénée et est dans une quantité d'au plus 35 % en poids par rapport au poids total de la composition.

5. Composition selon l'une quelconque des revendications 1 à 4, dans laquelle l'au moins une résine d'hydrocarbure hydrogénée possède un point de ramollissement dans la plage de 120 à 130 °C et est dans une quantité d'au moins 5 % en poids par rapport au poids total de la composition.

6. Composition selon l'une quelconque des revendications 1 à 5, dans laquelle la composition comprend deux résines d'hydrocarbure hydrogénées, dont au moins l'une dans une quantité de 5 % en poids par rapport au poids total de la composition et possédant un point de ramollissement dans la plage de 120 à 130°C.

7. Composition selon l'une quelconque des revendications 1 à 6, dans laquelle au moins une polyoléfine dérivée de la polymérisation d'éthylène et/ou de propylène par catalyse métallocène possède une densité dans la plage de 0,86 à 0,89 g/cm³.

8. Composition selon l'une quelconque des revendications 1 à 7, dans laquelle le copolymère d'EVA est dans une quantité de 10 à 15 % en poids par rapport au poids total de la composition.

9. Composition selon l'une quelconque des revendications 1 à 8, dans laquelle la composition comprend également des excipients sélectionnés parmi le groupe constitué de parfums, de colorants, de pigments, de paillettes.

10. Produit de colle comprenant la composition d'adhésif selon l'une quelconque des revendications 1 à 9 et des excipients appropriés pour la formulation finale.

11. Procédé de préparation du produit de colle selon la revendication 10, comprenant les étapes consistant à :
a) placer la composition d'adhésif selon l'une quelconque des revendications 1 à 9 dans un récipient approprié ;
b) chauffer et mélanger la composition à une température dans la plage de 125 °C à 220 °C ;
c) verser le produit de l'étape b) dans un moule approprié de forme souhaitée ; et
d) refroidir le produit dans le moule de l'étape c) à une température de -10°C à 25 °C.

12. Procédé selon la revendication 11, dans lequel entre l'étape b) et l'étape c), le produit de l'étape b) est soumis à une étape de dégazage, de préférence sous vide.

13. Procédé selon la revendication 11 ou 12, dans lequel le moule approprié de forme souhaitée de l'étape c) est en silicone ou en un autre matériau antiadhésif.

14. Procédé selon l'une quelconque des revendications 11 à 13, dans lequel l'étape d) de refroidissement est réalisée dans l'eau, facultativement en présence de liquide antigel, également facultativement en présence d'un additif de décollement, ou dans l'air à des températures de -10°C à 25°C ou encore dans l'azote ou un autre gaz cryogénique.

15. Procédé selon l'une quelconque des revendications 11 à 14, dans lequel le produit de l'étape d) est laissé reposer pendant au moins une heure dans le moule avant de le retirer afin d'obtenir le produit d'une forme souhaitée.

16. Produit de colle prêt à l'emploi apte à être obtenu par le procédé selon l'une quelconque des revendications 11 à 15.

17. Utilisation du produit de colle selon la revendication 10 ou la revendication 16 en tant que produit adhésif de papeterie prêt à l'emploi.
